# NEW EUROPEAN PATENT SPECIFICATION

(11) **EP 3 517 365 B2**
(45) Date of publication and mention of the opposition decision: **15.11.2023**
(45) Mention of the grant of the patent: 25.11.2020
(21) Application number: 19154341.2
(22) Date of filing: 29.01.2019
(51) Int. Cl.: B60R 3/00

(54) **CATWALK STEP FOR A VEHICLE**
TRITTSTUFE FÜR EIN FAHRZEUG
MARCHEPIED DE PASSERELLE POUR UN VÉHICULE

(30) Priority: 29.01.2018 IT 201800002116
(43) Date of publication of application: 31.07.2019
(73) Proprietor: IVECO MAGIRUS AG, 89079 Ulm (DE)
(72) Inventor: SPITZLBERGER, Jürgen, 89075 ULM (DE); GEYWITZ, Benjamin, 89079 ULM (DE); HÖLZLE, Franz, 89257 ILLERTISSEN (DE)
(74) Representative: Studio Torta S.p.A.

(56) References cited:
- DE-A1- 10 033 386
- DE-A1-102006 028 567
- DE-A1-102008 058 387
- GB-A- 2 510 683
- US-A- 4 102 432

## Description

### TECHNICAL FIELD

The present invention concerns a catwalk step for a vehicle, in particular a catwalk step for an heavy vehicle, such as a truck or a bus, preferably for a heavy gas vehicle.

### BACKGROUND ART

Heavy vehicles usually comprise catwalks which are designed to allow the driver to walk on them in order to execute a multiplicity of operations, such as inspection of the vehicle, filling of tanks of the vehicle or positioning of objects.

Aforementioned heavy vehicles comprise moreover catwalk steps configured to allow the driver to get on such catwalks. These steps are usually fixed to the chassis of the vehicle and have to surround elements of the vehicle such as tanks or wheels.

In view of the above, catwalk steps need to have a complex shape or to be made by resistant material in order to surround tanks or wheels of the vehicle. Therefore, their cost is high and their manufacturing is complex.

Moreover, the fixation of the steps on chassis (e.g. by threaded elements or by welding) increase the corrosion of the surface to which they are fixed.

Further, to avoid cost prohibitive designs for steps, it is known to design tanks with recess configured to match with steps position or to build "step boxes" in chassis. However, such tanks have obviously a reduced capacity and again costs are increased for obtaining such tanks or to modify chassis.

Examples of known catwalk steps in the art are disclosed in documents GB2510683 A, DE10033386 A1, US4102432 A. DE102006028567 A1, DE 102008058387 A1.

In view of the above, it is moreover clear that the positioning of known steps is not adjustable and that the assembly process on the vehicle is long and complicated.

Therefore, the need is felt to provide stepwalk steps which can solve the aforementioned drawbacks.

### DISCLOSURE OF INVENTION

An aim of the present invention is to satisfy the above mentioned needs in a simply and economic manner.

The aforementioned aim is reached by a catwalk step and to a method for securing such catwalk step on a vehicle according to the appended set of claims.

### BRIEF DESCRIPTION OF THE DRAWINGS

For a better understanding of the present invention, a preferred embodiment is described in the following, by way of a non-limiting example, with reference to the attached drawings wherein:
- Figure 1 is a perspective view of a portion of a vehicle comprising a catwalk step according to the present invention;
- Figure 2 is the perspective view of figure 1 with parts removed for sake of clarity;
- Figure 3 is a perspective view of a catwalk step according to present invention;
- Figure 4 is a perspective view of a fixation element of the catwalk step according to the present invention;
- Figure 5 is a perspective view of a portion of the fixation element of figure 4 engaged to the catwalk step of figure 3;
- Figure 6 is a perspective view of a portion of the fixation element of figure 4.

### BEST MODE FOR CARRYING OUT THE INVENTION

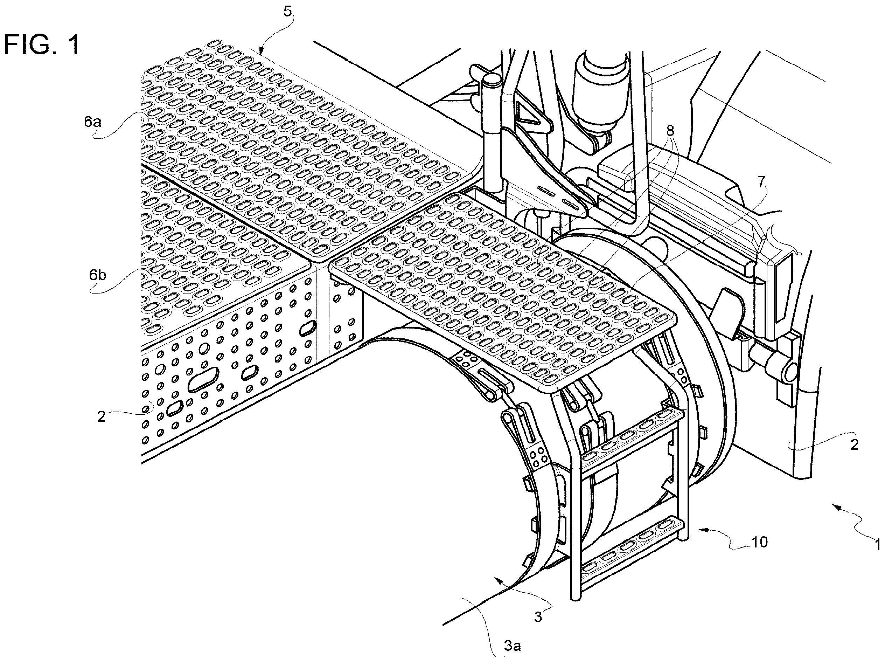

Figure 1 discloses a portion of a vehicle 1 essentially comprising a chassis frame2 and at least a tank 3, e.g. a curved tank configured to store LNG for the operation of vehicle 1.

Vehicle 1 further comprises a catwalk 5 carried by chassis 2 and preferably fixed to this latter in known way, e.g. by threaded means or by welding. Catwalk 5 may preferably comprise a main portion 6a, an auxiliary portion 6b and an access portion 7 positioned above tank 3 and fixed to chassis 2 and to the step 10 as disclosed in greater detail hereinafter.

Catwalk 5 may further comprise anti-slip means 8 configured to avoid the slipping of the user when walking on it in adverse atmospheric situations such as rain or ice. Such anti-slip means 8 may be for example a grip strut grating of known type.

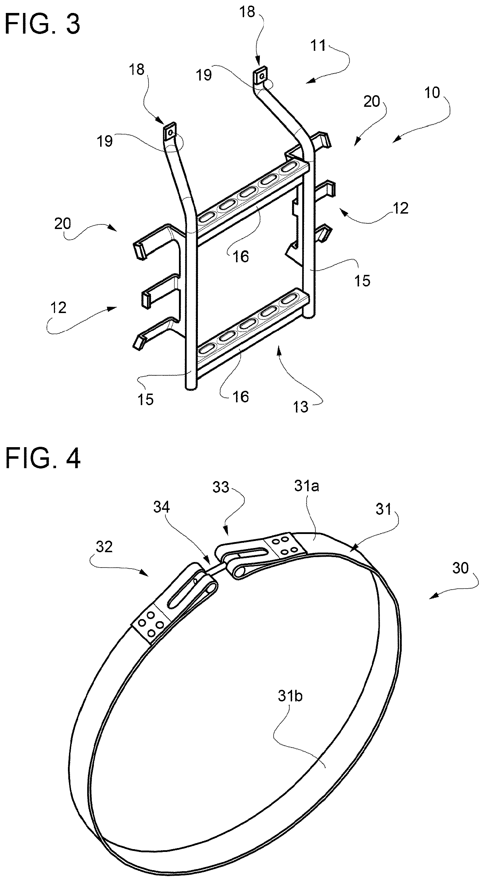

Vehicle 1 further comprises a step 10 according to the present invention (figures 1 and 3) configured to allow an user to get on catwalk 5 and fixed to tank 3 as described in the following.

Step 10 essentially comprises a connection portion 11 configured to cooperate with catwalk 5, a coupling portion 12 configured to cooperate with tank 3 and a structural portion 13 connecting connection portion 11 and coupling portion 12 and allowing the user to get on step 10 itself.

Structural portion 13 comprises a pair of pipes 15, e.g. rounded section pipes parallel to each other and at least one rung 16 connecting together the pair of pipes 15. In the described embodiment, two rungs 16 are provided between pipes 15 and they moreover comprise, on their upper surface, anti-slip means 8 as the ones disclosed for catwalk 5. Advantageously, pipes 15 and rungs 16 are realized as one piece and are made of steel.

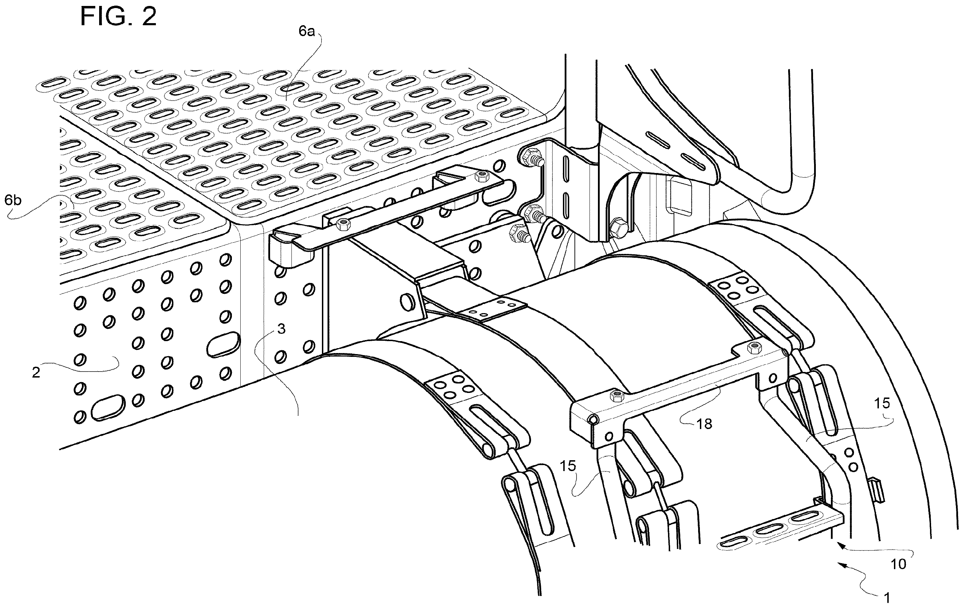

Connection portion 11 (see figure 2) may further comprise a bracket 18 connected to pipes 15 and configured to allow the fixation of step 10 catwalk 5, preferably to access portion 7. Bracket 18 may be fixed the upper terminal portions of pipes 15. Bracket 18 may comprise fixation holes 19 to allow the fixation of the upper terminal portion of pipes 15 to access portion 7 in any known way, e.g. by threaded connections.

Coupling portion 12 may comprise at least a pair of flanges 20 connected to structural portion 13 and configured to cooperate with an external surface 3a of tank 3 in order to define a positive locking, i.e. a form fit, between tank 3 and step 10 so as to lock any vertical movement of step 10.

According to the present embodiment, step 10 may comprise for each pipe 15 three flanges 20, in particular an upper bracket, a lower bracket and a bracket intermediate with respect to the upper and lower bracket. Advantageously at least two of these three flanges 20 are positioned so that one of these two flanges exchange a force to tank 3 which is directed to the ground and the other flange exchange a force to tank 3 which is directed to the opposite direction of the force imparted by the first flange.

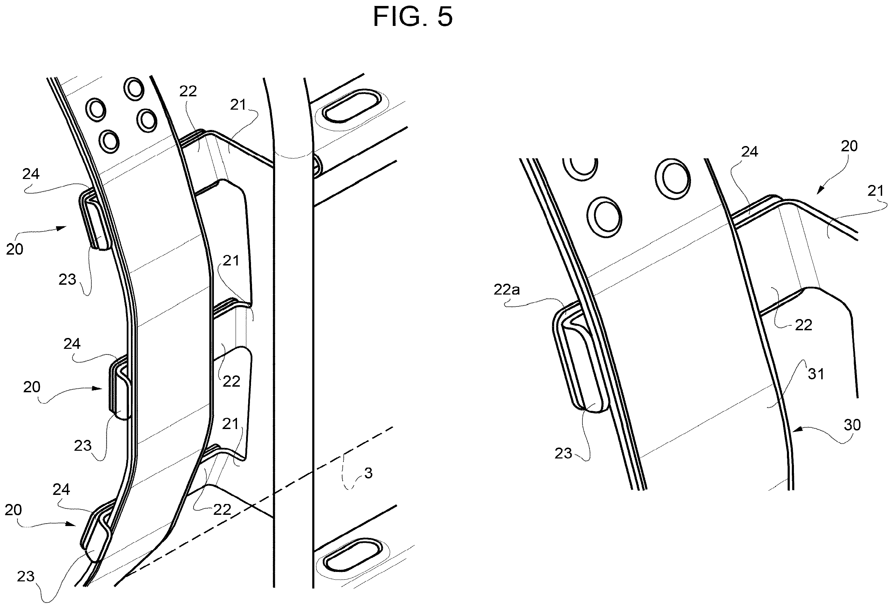

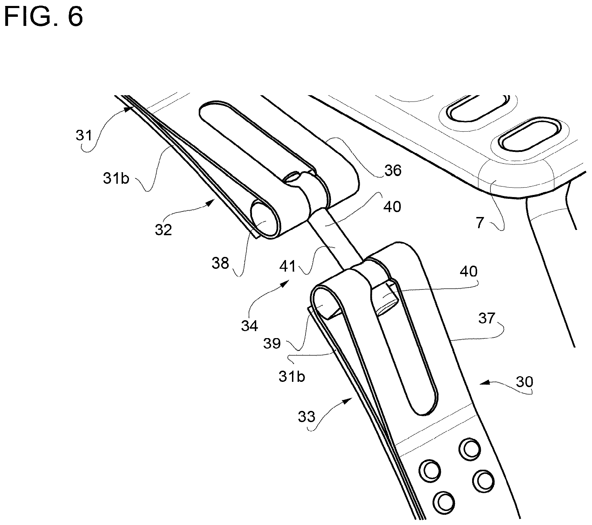

Each flange 20 (figures 5 and 6) comprises a spacer wall 21 connected to pipe 15 and extending perpendicularly with respect to this latter towards tank 3 and a coupling wall 22 connected to spacer wall 21 and extending perpendicularly with respect to this latter and getting away from pipe 15. Spacer wall 21 is configured to define a distance, equal to its length, between pipe 15 and coupling wall 22; coupling wall 22 is configured to cooperate with outer surface 3a of tank 3.

Coupling wall 22 defines a coupling surface 22a configured to cooperate with outer surface 3a of tank 3. In the described embodiment surface 22a is flat. It may be preferable that surface 22a is concave and it is curved in order to match with outer surface 3a of tank 3.

Coupling wall 22 may further comprise a bended extremity 23 configured to laterally cooperate with a band as described in greater detail in the following.

Spacer wall 21, coupling wall 22 and bended extremity 23 may advantageously be realized as one piece.

Each flange 20 may further comprise a pad 24 carried by coupling wall 22 and configured to be interposed between coupling wall 22 and tank 3 to avoid a direct contact between tank 3 and coupling surface 22a so as to decrease risk of corrosion. Pad 24 may be realized in any electrical isolating material, e.g. EPDM (Ethylene-Propylene Diene Monomer). Pad 24 is advantageously realized in soft material in order to facilitate the cooperation between the outer surface 3a of tank 3 with flat surface 22a of coupling wall 22.

Advantageously, connecting portion 11, coupling portion 12 and structural portion 13 are welded together to realize a single piece.

According to the present invention, step 10 is fixed to tank 3 thanks to a friction engagement between coupling surface 22a given by a force acting on coupling wall 22 directed towards tank 3.

According to the described embodiment, step 10 further comprises a tensioning belt 30 configured to impart the aforementioned force to flanges 20. Tensioning belt 30 (figure 3) is housed around tank 3 and lies on coupling walls 22 of each flange 20 so as to impart respective forces to these latter directed to tank 3. Tensioning belt 30 (see figure 4) is laterally retained by the respective bended extremities 23 to one side and by the respective spacing walls 21 to the opposite one.

Tensioning belt 30 preferably comprises at least a strap 31, in particular a single flat strap 31 being opened and having two extremities 32, 33 connected together by regulation means 34 to define a closed shape. Regulation means 34 are configured to reduce or increase the perimeter of the aforementioned closed shape, i.e. length of strap 31, as disclosed in the following.

Strap 31 may advantageously comprise a structural layer 31a preferably made in metal, e.g. steel, and an insulating layer 31b configured to avoid direct contact between tank 3 and structural layer 31a in order to decrease risk of corrosion. Insulation layer 31b may be realized in any isolating material, e.g. as previously mentioned EPDM.

Extremities 32 and 33 may be realized by refolding strap 31 on itself to produce respective eyelets 36, 37. Under eyelets 36, 37 a further insulation layer 31b may be provide to avoid a direct contact with tank 3. Belt 31 may be refolded to itself by clinching so as to avoid belt corrosion.

Regulation means 34 preferably connects eyelets 36, 37 via a member which is configured to modify its length in order to make extremities 32 and 33 to get closer or away with respect to each other. Perimeter of the aforementioned closed shape, i.e. length of strap 31, will be modified accordingly.

According to the described embodiment, regulation means 34 may comprise a pair of rods 38, 39 respectively housed in eyelets 36 and 37. Each rod 38, 39 advantageously comprises a through threaded hole 40; respective holes 40 of rods 38, 39 are coaxial each other and are preferably realized in the centerline of rods itself.

Holes 40 advantageously house an element 41 having a portion of its outer surface which is threaded in order to operatively cooperate with thread of holes 40 so that a rotation in one direction of element 41 make rods 38, 39 to get closer each other and that a rotation in the opposite direction of element 41 make rods 38, 39 to get away each other.

The operation of the catwalk step 10 according to the present invention is the following.

Step 10 is fixed in horizontal and lateral direction with respect longitudinal axis of tank 3 because belt 30 imparts respective forces directed towards tank 3 to coupling elements 22 that, via pad 24, generates a friction engagement between step 10 and tank 3. Such friction engagement may be regulated by reducing or increasing diameter of belt 30 via regulation means 34.

As already stated, the positioning of flanges 20 around tank 3, i.e. the form-fit, guarantees a vertical fixation of step 10 on tank 3.

User may get on stepwalk 5 supported by step 10 thanks to the aforementioned attachment of this latter on tank 3 in all three axis.

The present invention is moreover directed to a method for attaching, and vice versa removing, a catwalk step 10 as described above to a tank 3 of a vehicle 1.

Such method for attaching a catwalk step 10 essentially comprises the following steps:
- Fixing the structural portion 13 of step 10 to the catwalk 5;
- Matching the coupling portion 12 of step 10 to tank 3 to avoid vertical displacement of step 10 with respect tank 3;

- Positioning slack tensioning belt 30 on coupling portion 12;
- Reducing perimeter of belt 30 so as to impart a force to coupling portion 12 which can generate a friction engagement between coupling surface 22a and outer surface 3a of tank 3 so as to avoid horizontal and lateral displacement of step 10 with respect tank 3.

For sake of brevity the removing method is not described, comprising essentially the same steps executed in inverse order.

The reduction of length of belt 30 is function of the material and geometry of pad 24 and tank 3 and of the typology, material and geometry of belt 30.

In view of the foregoing, the advantages of a catwalk step 10 according to the invention are apparent.

First, fixation of catwalk step 10 to vehicle 1 is lighter, simpler and cheaper with respect to bolted or welded known fixations.

Moreover it is possible to attach catwalk step 10 in different position with respect to vehicle 1 or to adjust the positioning of this latter, if needed. The attachment and removal method is simply and versatile and may be applied to different shapes of tanks 3 and step 10.

Further, since direct contacts between metal of tank 3 and metal of belt 30 or step 10 is avoided, no corrosion incurs between the aforementioned elements. Such effect is moreover amplified because no welding or threaded elements are used.

Again, tank volume has not to be reduced to define steps in tank 3 and step 10 may be used for any typology and dimension of tank 3 of the vehicle.

It is clear that modifications can be made to the described catwalk step 10 which do not extend beyond the scope of protection defined by the claims.

For example, shapes of step 10 and belt 30 may be varied without departing from their functionalities. Therefore, belt 30 may comprise more straps 31 being of different typologies than the above described one or step 10 may comprise a different number of flanges 20 or rungs 16 having a different shape.

Tank 3 may be of any shape and coupling portion 12 of step 10 may be varied accordingly to define a form fit.

Further, regulation means 34 may be substituted by any equivalent, e.g. an electrical or pneumatic actuator.

## Claims

1. Catwalk step (10) for a vehicle (1) comprising a catwalk (5) and a tank (3), said step (10) comprising a structural portion (13) configured to allow the user to get on said catwalk (5) and a coupling portion (12) carried by said structural portion (13) and configured to match with an outer surface (3a) of said tank (3) and to cooperate by friction engagement with this latter so as to secure said step (10) on said tank (3) when a force directed towards said tank (3) is acting on said coupling portion (12), said coupling portion (12) comprising at least two flanges (20) coupled to said structural portion (13), each of said flanges (20) comprising at least a coupling wall (22) defining a surface (22a) configured to cooperate by friction engagement with said outer surface (3a) of said tank (3) in order to lock any lateral and horizontal displacement of said step (10) with respect to said tank (3), said flanges (20) defining a form-fit coupling with said tank (3) in order to lock any vertical displacement of said step (10) with respect to said tank (3), wherein said structural portion (13) comprises a pair of pipes (15) and at least one rung (16) connecting together said pipes (15), wherein each flange (20) comprises a spacer wall (21) connected to said pipe (15) and extending perpendicularly with respect to said pipe (15) towards said tank (3), said coupling wall (22) being connected to said spacer wall (21) and extending perpendicularly with respect to said spacer wall (21) getting away from said pipe (15).

2. Catwalk step according to claim 1, wherein said step (10) further comprises a connection portion (11) carried by said structural portion (13) and configured to connect said step (10) to said catwalk (5)

3. Catwalk step according to according to claim 1 or 2, wherein said step (10) comprises a pad (24) interposed between said coupling portion (12) and said tank (3).

4. Catwalk step according to claim 3, wherein said pad (24) is made by EPDM.

5. Catwalk step according to any of preceding claims, further comprising at least two tensioning belts (30) housed around said tank (3) and said coupling portion (12), each of said tensioning belts (30) being configured to impart to said coupling portion (12) said force.

6. Catwalk step according to claim 5, wherein each of said tensioning belts (30) comprises at least one strap (31) whose length may be varied to vary said force imparted by tensioning belt (30) to coupling portion (12).

7. Catwalk step according to claim 6, wherein said at least one strap (31) is opened and the extremities (32, 33) of said at least one strap (31) are connected together thanks to regulation means (34) to define a closed shape and configured to vary the perimeter of this latter.

8. Catwalk step according to claim 7, wherein said regulation means (34) comprise a mechanical device configured to get said extremities (32, 33) closer each other or to get said extremities (32, 33) away each other so as to vary the perimeter of said closed shape.

9. Method for attaching a catwalk step (10) according to any of claims 5 to 8, comprising the following steps:
• Matching said coupling portion (12) to said tank (3) to avoid vertical displacement of step (10) with respect said tank (3);
• Positioning slack tensioning belts (30) around said tank (3) and on said coupling portion (12);
• Reducing length of belts (30) so as to impart a force to coupling portion (12) which can generate a friction engagement between coupling surface (22a) and outer surface (3a) of tank (3) so as to avoid horizontal and lateral displacement of step (10) with respect tank (3).

## Patentansprüche

1. Trittstufe (10) für ein Fahrzeug (1), welches einen Laufsteg (5) und einen Tank (3) umfasst, welche Stufe (10) einen Strukturbereich (13) umfasst, ausgebildet, um es dem Benutzer zu ermöglichen, auf den Laufsteg (5) zu gelangen, und einen Kupplungsbereich (12), der von dem Strukturbereich (13) getragen wird und derart ausgebildet ist, dass er an eine äußere Oberfläche (3a) des Tanks (3) angepasst ist, und im Reibungseingriff mit diesem steht, derart, dass die Stufe (10) auf dem Tank (3) gesichert wird, wenn eine zum Tank (3) gerichtete Kraft auf den Kupplungsbereich (12) wirkt, wobei der Kupplungsbereich (12) zumindest zwei Flansche (20) umfasst, welche an den Strukturbereich (13) gekoppelt sind, und von denen jeder Flansch (20) zumindest eine Kupplungswand (22) umfasst, welche eine Oberfläche (22a) definiert, ausgebildet, um durch Reibungseingriff mit der äußeren Oberfläche (3a) des Tanks (3) zusammenzuwirken, um eine seitliche und horizontale Verschiebung der Stufe (10) bezüglich des Tanks (3) zu blockieren, wobei die Flansche (20) eine formschlüssige Kupplung mit dem Tank (3) definieren, um eine vertikale Verschiebung der Stufe (10) bezüglich des Tanks (3) zu blockieren, wobei der Strukturbereich (13) ein Paar von Rohren (15) und zumindest eine Sprosse (16) umfasst, welche die Rohre (15) verbindet, wobei jeder Flansch (20) eine Abstandshalterwand (21) umfasst, die mit dem Rohr (15) verbunden ist und sich senkrecht zum Rohr (15) in Richtung des Tanks (3) erstreckt, und wobei die Kupplungswand (22) mit der Abstandshalterwand (21) verbunden ist und sich senkrecht zur Abstandshalterwand (21) vom Rohr (15) weg erstreckt.

2. Trittstufe gemäß Anspruch 1, bei welcher die Stufe (10) ferner einen Verbindungsbereich (11) umfasst, der von dem Strukturbereich (13) getragen wird und dazu ausgeführt ist, die Stufe (10) mit dem Laufsteg (5) zu verbinden.

3. Trittstufe gemäß Anspruch 1 oder 2, bei welcher die Stufe (10) eine Platte (24) umfasst, zwischen dem Kupplungsbereich (13) und dem Tank (3) angeordnet ist.

4. Trittstufe gemäß Anspruch 3, bei welcher die Platte (24) aus EPDM hergestellt ist.

5. Trittstufe gemäß einem der vorhergehenden Ansprüche, ferner umfassend zumindest zwei Spanngurte (30), die um den Tank (30) und den Kupplungsbereich (13) herum gelegt sind, wobei jeder der Spanngurte (30) dazu ausgebildet ist, die Kraft auf den Kupplungsbereich (13) zu übertragen.

6. Trittstufe gemäß Anspruch 5, bei welcher jeder der Spanngurte (30) zumindest einen Riemen (31) umfasst, dessen Länge verstellt werden kann, um die Kraft zu verändern, die von dem Spanngurt (30) auf den Kupplungsbereich (13) übertragen wird.

7. Trittstufe gemäß Anspruch 6, bei welcher der zumindest eine Riemen (31) geöffnet ist und die Enden (32,33) des zumindest einen Riemens (31) miteinander durch Verstellmittel (34) verbunden sind, um eine geschlossene Form zu begrenzen und den Umfang der letzteren zu variieren.

8. Trittstufe gemäß Anspruch 7, bei welcher die Verstellmittel (34) eine mechanische Einrichtung umfassen, ausgebildet, um die Enden (32,33) einander anzunähern oder die Enden (32,33) voneinander zu entfernen, um den Umfang der geschlossenen Form zu variieren.

9. Verfahren zur Anbringung einer Trittstufe (10) gemäß einem der Ansprüche 5 bis 8, umfassend die folgenden Schritte:
- Anpassen des Kupplungsbereichs (12) an den Tank zur Vermeidung einer vertikalen Verschiebung der Stufe (10) bezüglich des Tanks (3);
- Positionieren der losen Spanngurte (30) um den Tank (3) und auf dem Kupplungsbereich (12);
- Reduzieren der Länge der Spanngurte (30), um eine Kraft auf den Kupplungsbereich (12) auszuüben, welche einen Reibungseingriff zwischen der Kupplungsfläche (22a) und der äußeren Oberfläche (3a) des Tanks (3) erzeugen kann, um eine horizontale und seitliche Verschiebung der Trittstufe (10) bezüglich des Tanks (3) zu vermeiden.

## Revendications

1. Marchepied (10) de passerelle pour un véhicule (1) comprenant une passerelle (5) et un réservoir (3), ledit marchepied (10) comprenant une portion structurelle (13) configurée pour permettre à l'utilisateur de monter sur ladite passerelle (5) et une portion de couplage (12) portée par ladite portion structurelle (13) et configurée pour correspondre à une surface extérieure (3a) dudit réservoir (3) et pour coopérer en prise par friction avec ce dernier de manière à fixer ledit marchepied (10) sur ledit réservoir (3) lorsqu'une force dirigée vers ledit réservoir (3) agit sur ladite portion de couplage (12), ladite portion de couplage (12) comprenant au moins deux brides (20) couplées à ladite portion structurelle (13), chacune desdites brides (20) comprenant au moins une paroi de couplage (22) définissant une surface (22a) configurée pour coopérer en prise par friction avec ladite surface extérieure (3a) dudit réservoir (3) afin de bloquer tout déplacement latéral et horizontal dudit marchepied (10) par rapport audit réservoir (3), lesdites brides (20) définissant un couplage à complémentarité de forme avec ledit réservoir (3) afin de bloquer tout déplacement vertical dudit marchepied (10) par rapport audit réservoir (3), dans lequel ladite portion structurelle (13) comprend une paire de tubes (15) et au moins un échelon (16) reliant lesdits tubes (15) l'un à l'autre, dans lequel chaque bride (20) comprend une paroi d'entretoise (21) reliée audit tube (15) et s'étendant perpendiculairement par rapport audit tube (15) vers ledit réservoir (3), ladite paroi de couplage (22) étant reliée à ladite paroi d'entretoise (21) et s'étendant perpendiculairement par rapport à ladite paroi d'entretoise (21) en s'éloignant dudit tube (15).

2. Marchepied de passerelle selon la revendication 1, dans lequel ledit marchepied (10) comprend en outre une portion de liaison (11) portée par ladite portion structurelle (13) et configurée pour relier ledit marchepied (10) à ladite passerelle (5).

3. Marchepied de passerelle selon la revendication 1 ou 2, dans lequel ledit marchepied (10) comprend un coussinet (24) interposé entre ladite portion de couplage (12) et ledit réservoir (3).

4. Marchepied de passerelle selon la revendication 3, dans lequel ledit coussinet (24) est constitué d'EPDM.

5. Marchepied de passerelle selon l'une quelconque des revendications précédentes, comprenant en outre au moins deux bandes de serrage (30) logées autour dudit réservoir (3) et de ladite portion de couplage (12), chacune desdites bandes de serrage (30) étant configurée pour appliquer ladite force à ladite portion de couplage (12).

6. Marchepied de passerelle selon la revendication 5, dans lequel chacune desdites bandes de serrage (30) comprend au moins une sangle (31) dont la longueur peut varier pour faire varier ladite force appliquée par la bande de serrage (30) à la portion de couplage (12).

7. Marchepied de passerelle selon la revendication 6, dans lequel ladite au moins une sangle (31) est ouverte et les extrémités (32, 33) de ladite au moins une sangle (31) sont reliées l'une à l'autre par des moyens de régulation (34) pour définir une forme fermée et configurés pour faire varier le périmètre de celle-ci .

8. Marchepied de passerelle selon la revendication 7, dans lequel lesdits moyens de régulation (34) comprennent un dispositif mécanique configuré pour rapprocher lesdites extrémités (32, 33) l'une de l'autre ou pour éloigner lesdites extrémités (32, 33) l'une de l'autre afin de faire varier le périmètre de ladite forme fermée.

9. Méthode d'attachement d'un marchepied (10) de passerelle selon l'une quelconque des revendications 5 à 8, comprenant les étapes suivantes :
• la mise en correspondance de ladite portion de couplage (12) avec ledit réservoir (3) pour éviter tout déplacement vertical dudit marchepied (10) par rapport audit réservoir (3) ;
• le positionnement de bandes de serrage (30) lâches autour dudit réservoir (3) et sur ladite portion de couplage (12) ;
• la réduction d'une longueur de bandes (30) de manière à appliquer une force à la portion de couplage (12) qui peut générer une prise par friction entre la surface de couplage (22a) et la surface extérieure (3a) du réservoir (3) afin d'éviter tout déplacement horizontal et latéral du marchepied (10) par rapport au réservoir (3).
